# EUROPÄISCHE PATENTSCHRIFT

(11) **EP 3 857 455 B1**
(45) Veröffentlichungstag und Bekanntmachung des Hinweises auf die Patenterteilung: **27.11.2024**
(21) Anmeldenummer: 19755342.3
(22) Anmeldetag: 13.08.2019
(51) Int. Cl.: G06N 3/0495, G06N 3/048, G06N 3/09

(54) **MASCHINELLES LERNSYSTEM, SOWIE EIN VERFAHREN, EIN COMPUTERPROGRAMM UND EINE VORRICHTUNG ZUM ERSTELLEN DES MASCHINELLEN LERNSYSTEMS**
MACHINE LEARNING SYSTEM AND A METHOD, A COMPUTER PROGRAM AND A DEVICE FOR CREATING THE MACHINE LEARNING SYSTEM
SYSTÈME D'APPRENTISSAGE AUTOMATIQUE AINSI QUE PROCÉDÉ, PROGRAMME INFORMATIQUE ET DISPOSITIF POUR CRÉER LE SYSTÈME D'APPRENTISSAGE AUTOMATIQUE

(30) Priorität: 26.09.2018 DE 102018216471; 29.11.2018 DE 102018220608
(43) Veröffentlichungstag der Anmeldung: 04.08.2021
(73) Patentinhaber: Robert Bosch GmbH, 70442 Stuttgart (DE)
(72) Erfinder: PFEIL, Thomas, 71272 Renningen (DE)
(86) Internationale Anmeldenummer: PCT/EP2019/071761
(87) Internationale Veröffentlichungsnummer: WO 2020/064209

(56) Entgegenhaltungen:
- DE-U1- 202018 104 373
- BASKIN CHAIM ET AL: "Streaming Architecture for Large-Scale Quantized Neural Networks on an FPGA-Based Dataflow Platform", 2018 IEEE INTERNATIONAL PARALLEL AND DISTRIBUTED PROCESSING SYMPOSIUM WORKSHOPS (IPDPSW), IEEE, 21 May 2018 (2018-05-21), pages 162 - 169, XP033379810, DOI: 10.1109/IPDPSW.2018.00032
- KAIMING HE ET AL: "Deep Residual Learning for Image Recognition", 2016 IEEE CONFERENCE ON COMPUTER VISION AND PATTERN RECOGNITION (CVPR), 10 December 2015 (2015-12-10), arXiv, pages 1 - 12, XP055353100, Retrieved from the Internet <URL:https://arxiv.org/abs/1512.03385> [retrieved on 20170309], DOI: 10.1109/CVPR.2016.90
- DARRYL D LIN ET AL: "Fixed Point Quantization of Deep Convolutional Networks", 19 November 2015 (2015-11-19), pages 1 - 10, XP055284812, Retrieved from the Internet <URL:https://arxiv.org/pdf/1511.06393v3.pdf> [retrieved on 20160630]

## Beschreibung

### Technisches Gebiet

Die Erfindung betrifft ein maschinelles Lernsystem, welches zumindest Parameter mit einer geringeren Auflösung aufweist. Ferner betrifft die Erfindung ein Verfahren und ein Computerprogramm, sowie eine Vorrichtung zum Erstellen des maschinellen Lernsystems.

### Stand der Technik

Das Dokument DE 10 2017 218 889.8 offenbart ein Künstliches-Intelligenz-Modul, welches dazu ausgebildet ist, eine oder mehrere Eingangsgrößen durch eine interne Verarbeitungskette zu einer oder mehreren Ausgangsgrößen zu verarbeiten. Die interne Verarbeitungskette ist durch einen oder mehrere Parameter festgelegt. Ein Verteilungsmodul ist vorgesehen, welches dazu ausgebildet ist, abhängig von wenigstens einer statistischen Verteilung die Parameter zu ermitteln

Es ist möglich, quantisierte neuronale Netze mit extrem starker Quantisierung zu erstellen, wie z.B. gezeigt von HUBARA, Itay, et al. "Quantized neural networks: Training neural networks with low precision weights and activations" The Journal of Machine Learning Research, 2017, 18. Jg., Nr. 1, S. 6869-6898. C. Baskin, N. Liss, E. Zheltonozhskii, A. M. Bronstein and A. Mendelson, "Streaming Architecture for Large-Scale Quantized Neural Networks on an FPGA-Based Dataflow Platform," 2018 IEEE International Parallel and Distributed Processing Symposium Workshops (IPDPSW), Vancouver, BC, Canada, 2018, pp. 162-169, doi: 10.1109/IPDPSW.2018.00032 präsentiert eine Streaming-Architektur für die Ausführung von QNNs auf FPGAs.

### Offenbarung der Erfindung

Ein erster Aspekt betrifft ein computerimplementiertes maschinelles Lernsystem nach Anspruch 1.

Es sei angemerkt, dass vorteilhafterweise die Parameter in einem Speicher hinterlegt werden, wodurch mittels einer Reduktion deren Auflösungen weniger Speicherplatz benötigt wird.

Unter einer vorhergehenden Schicht wird diejenige Schicht verstanden, die ihre Ausgangsgröße zeitlich vor der jeweiligen verbundenen Schicht ermittelt und ihre Ausgangsgröße der jeweiligen verbundenen Schicht als Eingangsgröße bereitstellt. Unter einer nachfolgenden Schicht wird diejenige Schicht verstanden, die als Eingangsgröße die Ausgangsgröße der jeweiligen verbundenen Schicht erhält.

Unter eingangsseitig verbunden kann verstanden werden, dass eine Ausgangsgröße einer der Schichten, insbesondere einer vorhergehenden und/oder einer nachfolgenden Schicht, als eine Eingangsgröße der mit dieser Schicht verbundenen Schicht verwendet wird.

Das maschinelle Lernsystem des ersten Aspekts weist den Vorteil auf, dass durch die reduzierte Auflösung der besagten Parameter, diese Parameter in dem Speicher besonders effizient unter geringem Speicherplatzbedarf abgespeichert werden können, ohne das überraschenderweise eine Leistungsfähigkeit des maschinellen Lernsystems beeinträchtigt wird. Des Weiteren kann durch die reduzierte Auflösung der Parameter der Rechenbedarf dieses maschinellen Lernsystems reduziert werden, da beispielsweise durch ein geschicktes Ausnutzen der Rechenarchitektur und der geringeren Auflösung der Parameter, die Parameter parallel verarbeitet werden können. Ein weiterer Vorteil ist, dass durch den resultierenden ressourcenschonenden Umgang, das maschinelle Lernsystem sowohl für stationäre (z. B. in Rechenzentren) als auch für mobile Anwendungen (z. B. mobile Datenverarbeitungsanlangen oder eingebettete Systeme) verwendet werden kann. Derartig komprimierte maschinelle Lernsysteme eignen sich besonders dazu, gemessene Daten nahe am Sensor bzw. im Sensor selbst zu verarbeiten, womit gemessene Daten komprimiert und bandbreiteneffizienter übertragen werden können.

Dass die gezielt geringere Auflösung, insbesondere stärkere Quantisierung, derjenigen Parameter der Schichten, die mit mehreren weiteren Schichten verbunden sind, nicht die Leistungsfähigkeit, insbesondere die Genauigkeit der Ergebnisse, des maschinellen Lernsystems verschlechtert, kommt daher, dass durch die zusätzlichen Verbindungen weiterer unterschiedlicher Schichten, unterschiedlich verarbeitete Ausgangsgrößen bereitgestellt werden. Dadurch erhält diejenige Schicht, die mit mehreren Schichten verbunden ist, mehr Informationen und die Eingangsgrößen können dadurch in einem besseren bzw. vollständigerer beschriebenen Zustandsraum dargestellt werden. Deshalb sind diese Schichten robuster gegenüber Störungen, wodurch die Parameter und Aktivierungen dieser Schicht bspw. stärker quantisiert werden können, ohne die Leistungsfähigkeit des maschinellen Lernsystems zu beeinträchtigen. Es sei angemerkt, dass alles bzgl. der Auflösungen der Parameter, auch auf die Aktivierungen angewendet werden kann.

Durch die Verwendung weniger Bit zum Speichern der Parameter wird ein kleinerer Speicher benötigt, der eine kompaktere Bauweise des maschinellen Lernsystems erlaubt. Da der Energieverbrauch für das Speichern und Lesen der Parameter und Aktivierungen proportional zu der Anzahl der Bit und für Multiplikationen quadratisch zu der Auflösung (in Bit) der Parameter und Aktivierungen ist, ist eine Reduktion der Anzahl der Bit, insbesondere durch eine Quantisierung, besonders computerressourceneffizient.

Weiterhin wird vorgeschlagen, dass die Parameter derjenigen Schichten, die mit einer weiteren Schicht verbunden sind, jeweils eine Größe aus einer ersten Liste möglicher, insbesondere diskreter, Größen aufweisen, und die Parameter derjenigen Schichten, die mit einer Mehrzahl von weiteren Schichten verbunden sind, jeweils eine Größe aus einer zweiten Liste möglicher, insbesondere diskreter, Größen aufweisen.

Beispielsweise können die Größen der Listen durch eine Ermittlung von Clusterzentren der Parameter bestimmt werden, die daraufhin verwendet werden können, um die Parameter anhand der, insbesondere diskreten, Clusterzentren effizient in dem Speicher zu hinterlegen. Der Vorteil der Listen ist, dass die Listen jeweils z.B. die ermittelten Clusterzentren aufweisen, wodurch mittels Vergleichen der Größen der Parameter mit den Größen der Listen, den Parametern geeignete Größen zugeordnet werden können und die Parameter anhand der geringeren Anzahl unterschiedlicher möglicher Größen der Parameter eine geringere Auflösung aufweisen. Es sei angemerkt, dass die Listen alternativ oder zusätzlich gerundete Werte der ermittelten Parameter oder der ermittelten Clusterzentren aufweisen können. Alternativ können die Listen jeweils für jede Schicht separat ermittelt werden.

Weiterhin wird vorgeschlagen, dass die erste Liste mehr Einträge als die zweite Liste enthält. Denkbar ist, dass die Größen der Listen quantisierte Größen sind, wobei hier Werte der zweiten Liste stärker quantisiert sind, d.h. insbesondere weniger Quantisierungsstufen haben, als die Werte der ersten Liste.

Weiterhin wird vorgeschlagen, dass die die Auflösung der Parameter und/oder Aktivierungen abhängig von einer Anzahl der unmittelbar eingangsseitig verbundenen Schichten ist.

Es sei angemerkt, dass das maschinelle Lernsystem sowohl ausschließlich in Hardware, als auch in einer Mischung aus Software und Hardware realisiert werden kann, wodurch jeweils weniger Speicher zum Hinterlegen der Parameter bereitgestellt werden muss, weshalb das maschinelle Lernsystem gemäß dem ersten Aspekt der Erfindung auch in kleinsten technischen System verbaut und eingesetzt werden kann.

Ferner sei angemerkt, dass jede der Schichten mit jeweils zumindest zwei weiteren Schichten der Mehrzahl der Schichten eingangsseitig verbunden sein kann, insbesondere das jede Schicht eine Überbrückungsverbindung (engl. skip connection) aufweist. Ein maschinelles Lernsystem mit diesen Schichten kann entsprechend zu oben genannten Ausführungen des ersten Aspekts der Erfindung eine geringere Auflösung, insbesondere eine stärkere Quantisierung, aufweisen als einen äquivalentes maschinelle Lernsystem, bei dem diese Schichten eingangsseitig nur mit einer weiteren Schicht verbunden sind.

Ein zweiter Aspekt betrifft ein computerimplementiertes Verfahren nach Anspruch 4 zum Erstellen des maschinellen Lernsystems nach dem ersten Aspekt vorgeschlagen.

Vorzugsweise ist ein komprimiertes maschinelles Lernsystem zu einem bereitgestellten maschinellen Lernsystem strukturgleich, weshalb unter entsprechender Auflösung von Parametern oder Aktivierungen verstanden werden kann, dass die Parameter oder Aktivierungen an der gleichen Position des jeweils anderen maschinellen Lernsystems mit der entsprechenden Auflösung wiederzufinden sind.

Weiterhin wird vorgeschlagen, dass beim Reduzieren der Auflösung der Parameter zumindest zwei Listen mit jeweils möglichen Größen der Parameter bereitgestellt werden. Die Größen der Liste können jeweils mittels einer Quantisierung oder mittels einer Clusterung oder mittels einer Rundung der Größen der geänderten Parameter beim Anlernen ermittelt werden. Die Parameter derjenigen Schichten, deren Eingangsgröße die Ausgangsgröße einer der weiteren Schichten ist, wird jeweils eine Größe aus einer ersten Liste möglicher, insbesondere diskreter, Größen zugewiesen, und der Parameter derjenigen Schicht deren Eingangsgröße die Mehrzahl der Ausgangsgrößen weiterer Schichten ist, wird jeweils eine Größe aus einer zweiten Liste möglicher, insbesondere diskreter, Größen zugewiesen.

Weiterhin wird vorgeschlagen, dass das Anlernen abhängig von einer Kostenfunktion durchgeführt wird, wobei die Kostenfunktion einen zusätzlichen Term aufweist, der eine Bestrafung der Größen der Parameter vorsieht, wenn diese ungleich einer möglichen quantisierten Größe der Parameter sind.

Das maschinelle Lernsystem, welches gemäß dem zweiten Aspekt erzeugt wurde, ermittelt abhängig von einer erfassten Sensorgröße eines Sensors eine Ausgangsgröße, die daraufhin zum Ermitteln einer Steuergröße mittels einer Steuereinheit verwendet wird.

Die Steuergröße wird zum Steuern eines Aktors eines technischen Systems verwendet werden. Das technische System kann zum Beispiel eine zumindest teilautonome Maschine, ein zumindest teilautonomes Fahrzeug, ein Roboter, ein Werkzeug, eine Werkmaschine oder ein Flugobjekt wie eine Drohne sein. Die Eingangsgröße kann bspw. abhängig von erfassten Sensordaten ermittelt und dem maschinellen Lernsystem bereitgestellt werden. Die Sensordaten können von einem Sensor, wie z.B. einer Kamera, des technischen Systems erfasst oder alternativ von extern empfangen werden.

Erfindungsgemäß ist das maschinelle Lernsystem alternativ eingerichtet, die Sensordaten zu klassifizieren.

Weitere Aspekte betreffen ein Computerprogramm nach Anspruch 7, ein maschinenlesbares Speichermedium nach Anspruch 8, sowie eine Vorrichtung nach Anspruch 9.

Ausführungsbeispiele der oben genannten Aspekte sind in den beiliegenden Zeichnungen dargestellt und in der nachfolgenden Beschreibung näher erläutert. Dabei zeigen:

### Kurze Beschreibung der Zeichnungen

- Fig. 1: eine schematische Darstellung eines Fahrzeuges;
- Fig. 2: eine schematische Darstellung eines tiefen neuronalen Netzes mit einer Überbrückungsverbindung und einem Speicher;
- Fig. 3: eine schematische Darstellung einer Ausführungsform des Verfahrens zum Erzeugen eines maschinellen Lernsystems mit komprimierten Parametern;
- Fig. 4: eine schematische Darstellung einer Ausführungsform einer Vorrichtung, welche zum Anlernen des maschinellen Lernsystems verwendet werden kann.

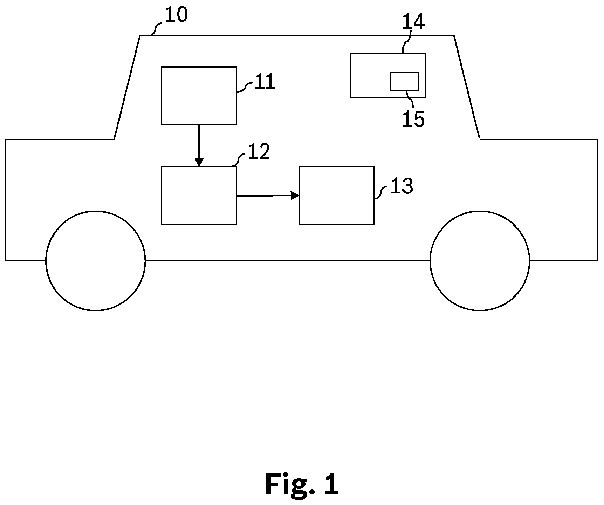

Figur 1 zeigt eine schematische Darstellung eines zumindest teilautonomen Roboters, welcher in einem ersten Ausführungsbeispiel durch ein zumindest teilautonomes Fahrzeug (10) gegeben ist. In einem weiteren Ausführungsbeispiel kann der zumindest teilautonome Roboter ein Service-, Montage- oder stationärer Produktionsroboter, alternativ ein autonomes Flugobjekt, wie eine Drohne, sein.

Das zumindest teilautonome Fahrzeug (10) kann eine Erfassungseinheit (11) umfassen. Die Erfassungseinheit (11) kann zum Beispiel eine Kamera sein, welche eine Umgebung des Fahrzeugs (10) erfasst. Die Erfassungseinheit (11) kann mit einem maschinellen Lernsystem (12) verbunden sein. Das maschinelle Lernsystem (12) ermittelt abhängig von einer bereitgestellten Eingangsgröße, z.B. bereitgestellt von der Erfassungseinheit (11), und in Abhängigkeit einer Mehrzahl von Parametern des maschinellen Lernsystems (12) eine Ausgangsgröße. Die Ausgangsgröße kann an eine Steuerungseinheit (13) weitergeleitet werden.

Die Steuerungseinheit (13) steuert in Abhängigkeit der Ausgangsgröße des maschinellen Lernsystem (12) einen Aktor, vorzugsweise steuert diesen den Aktor derart, dass das Fahrzeug (10) ein kollisionsfreies Manöver ausführt. Im ersten Ausführungsbeispiel kann der Aktor ein Motor oder ein Bremssystem des Fahrzeugs (10) sein.

In einem weiteren Ausführungsbeispiel kann der teilautonome Roboter ein Werkzeug, eine Werkmaschine oder ein Fertigungsroboter sein. Ein Material eines Werkstückes kann mittels des maschinellen Lernsystem (12) klassifiziert werden. Der Aktor kann hierbei z.B. ein Motor, der einen Schleifkopf betreibt, sein.

Ferner umfasst das Fahrzeug (10), insbesondere der teilautonome Roboter, eine Recheneinheit (14) und ein maschinenlesbares Speicherelement (15). Auf dem Speicherelement (15) kann ein Computerprogramm gespeichert sein, welches Befehle umfasst, die beim Ausführen der Befehle auf der Recheneinheit (14) dazu führen, dass mittels der Recheneinheit (14) das maschinelle Lernsystem (12) betrieben wird.

In einem weiteren Ausführungsbeispiel des teilautonomen Roboters umfasst die Steuerungseinheit (13) ein Freigabesystem. Das Freigabesystem entscheidet, ob ein Objekt, z.B. ein erfasster Roboter oder eine erfasste Person, Zugang zu einem Bereich hat, abhängig von der Ausgangsgröße des maschinellen Lernsystems (12). Vorzugsweise wird der Aktor, beispielhaft ein Türöffnungsmechanismus, mittels der Steuerungseinheit (13) angesteuert.

In einem alternativen Ausführungsbeispiel kann das maschinelle Lernsystem (12), das mit der Erfassungseinheit (11) wie im ersten Ausführungsbeispiel verbunden ist, für eine Gebäudesteuerung eingesetzt werden. Ein Nutzerverhalten wird mittels eines Sensors erfasst, beispielsweise einer Kamera oder eines Bewegungsmelders, und die Steuerungseinheit steuert beispielsweise eine Wärmepumpe einer Heizung abhängig von der Ausgangsgröße des maschinellen Lernsystems (12). Das maschinelle Lernsystem (12) kann dann eingerichtet sein, auf Basis von dem erfassten Nutzerverhalten zu ermitteln, welcher Betriebsmodus der Gebäudesteuerung gewünscht ist.

In einer weiteren Ausführungsform wird das maschinelle Lernsystem (12) in einem Messsystem verwendet, welches nicht in den Figuren dargestellt ist. Das Messsystem unterscheidet sich zu dem Fahrzeug (10) nach Figur 1 dahingehend, dass das Messsystem keine Steuerungseinheit (13) umfasst. Das Messsystem kann die Ausgangsgröße des ersten maschinellen Lernsystems (12), statt sie an die Steuerungseinheit (13) weiterzuleiten, abspeichern oder darstellen, beispielsweise mittels visueller oder auditiver Darstellungen.

Es ist auch denkbar, dass in einer Weiterentwicklung des Messsystems die Erfassungseinheit (11) ein Bild eines menschlichen oder tierischen Körpers oder eines Teils davon erfasst. Beispielsweise kann dies mittels eines optischen Signals, mittels eines Ultraschallsignals, oder mittels eines MRT/CT-Verfahrens erfolgen. Das Messsystem kann in dieser Weiterentwicklung das maschinelle Lernsystem (12) umfassen, das derart angelernt ist, abhängig von der Eingangsgröße eine Klassifikation auszugeben, z.B. welches Krankheitsbild auf Basis diese Eingangsgröße möglicherweise vorliegt.

In einem weiteren Ausführungsbeispiel kann das maschinelle Lernsystem (12) in einem Sensor bzw. in der Erfassungseinheit (11) integriert sein, um die erfassten Sensorwerte mittels des maschinellen Lernsystems (12) zu verarbeiten. Die verarbeiteten Sensorwerte, mittels des maschinellen Lernsystems (12), sind vorzugsweise komprimierte oder bereits ausgewertete Sensorwerte, sodass diese anschließend effizient an beispielsweise die Steuerungseinheit (13) übertragen werden können. Vorzugsweise sind hierbei zumindest die Parameter auf einem Chip des Sensors gespeichert oder das maschinelle Lernsystem in Hardware auf dem Chip integriert.

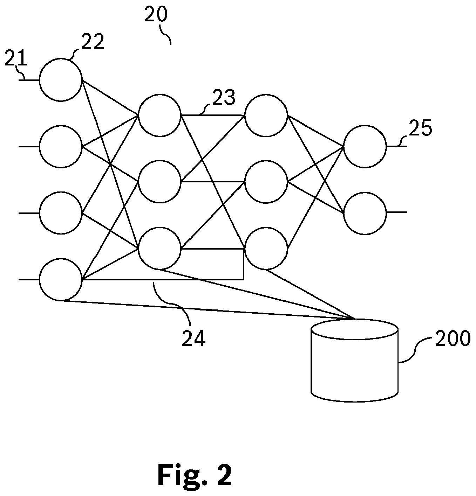

Figur 2 zeigt eine schematische Darstellung des maschinellen Lernsystems (12), welches in dieser Ausführungsform durch ein tiefes neuronales Netz (20) gegeben ist. In weiteren Ausführungsformen kann das maschinelle Lernsystem (12) durch ein faltendes neuronales Netz (engl. Convolutional Neural Network) oder ein rekurrentes neuronales Netz (engl. Recurrent Neural Network) gegeben sein.

Das tiefe neuronale Netz (20) umfasst mehrere Schichten, die jeweils mittels Verbindungen (23) miteinander verbunden sind und die jeweils mehrere Neuronen (22) umfassen. Ferner weist das tiefe neuronale Netz (20) eine Überbrückungsverbindung (24) auf. Die Überbrückungsverbindung (24) in Figur 2 hat den Effekt, dass eine Ausgangsgröße der ersten Schicht des tiefen neuronalen Netzes (20) direkt an die dritte Schicht weitergeleitet wird und hier als Eingangsgröße bereitgestellt wird. Damit wird die zweite Schicht überbrückt. Es sei angemerkt, dass die Überbrückungsverbindung (24) auch in die entgegengesetzte Richtung ausgestaltet sein kann. Beispielsweise kann eine Ausgangsgröße der dritten Schicht mittels einer rekurrenten Überbrückungsverbindung an eine vorhergehende Schicht als Eingangsgröße zugeführt werden.

Das tiefe neuronale Netz (20) ermittelt schichtweise abhängig von einer Eingangsgröße (21) des tiefen neuronalen Netzes (20) eine Ausgangsgröße (25). Hierfür ermittelt jede Schicht abhängig von der ihr bereitgestellten Eingangsgröße und abhängig von den Parametern dieser Schicht, eine Ausgangsgröße. Die Ausgangsgröße wird daraufhin durch die Verbindungen (23) an die weiteren Schichten weitergeleitet.

In diesem Ausführungsbeispiel können die Parameter der jeweiligen Schichten beispielhaft jeweils zumindest eine erste Größe oder/und eine zweite Größe und eine dritte Größe aufweisen. Die Schichten können jeweils die Eingangsgröße mittels der ersten Größe gewichten oder/und mittels der zweiten Größe filtern.

Die Schichten können zu der gewichteten/gefilterten Eingangsgröße die dritte Größe dazu addieren. Optional wird diese verarbeitete Eingangsgröße abhängig von dem Parameter mittels einer Aktivierungsfunktion (z.B. ReLu) weiterverarbeitet. Optional kann die Schicht auch eine Normierungsschicht (engl. batch normalization layer) umfassen.

Die Besonderheit des neuronalen Netzes (20) ist, dass die Parameter der Schicht, die mittels der Überbrückungsverbindung (24) die Ausgangsgröße der ersten Schicht als Eingangsgröße erhält, mit einer geringeren Auflösung als die Parameter der anderen Schichten, die keine Überbrückungsverbindung aufweisen, in zumindest einem Speicher (200) hinterlegt sind. Beispielhaft sind die Parameter der dritten Schicht mittels 5 Bit und die Parameter der weiteren Schichten mittels zumindest 8 Bit in dem Speicher (200) hinterlegt. Es sei angemerkt, dass die Aktivierungen durch die reduzierte Auflösung der Parameter ebenfalls in einer reduzierten Auflösung, z.B. 5 Bit, dargestellt werden können.

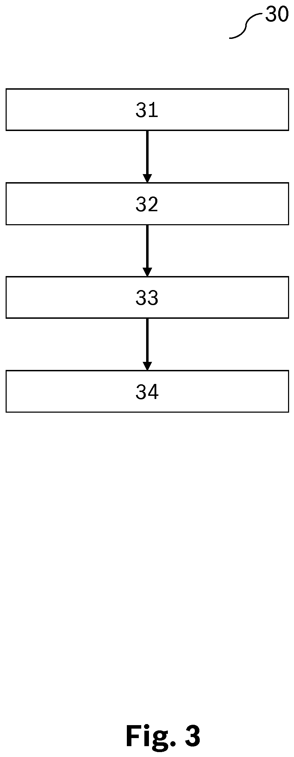

Figur 3 zeigt eine schematische Darstellung eines Verfahrens (30) zum Erstellen des maschinellen Lernsystems (12).

Das Verfahren beginnt mit Schritt 31. Hierin werden Trainingsdaten dem maschinellen Lernsystem (12) bereitgestellt. Die Trainingsdaten umfassen vorzugsweise Trainingseingangsgrößen und jeweils zugeordnete Trainingsausgangsgrößen (engl. Label). Die Trainingseingangsgrößen können zum Beispiel Bilder einer Kamera sein und die Trainingsausgangsgrößen können beispielsweise eine Klassifizierung oder Segmentierung der Kamerabilder sein. Zusätzlich oder alternativ könne die Trainingsdaten eine Mehrzahl von gelabelten Tonsequenzen, Textausschnitte, Radar-, Lidar- oder Ultraschall-signale umfassen.

Im nachfolgenden Schritt 32 wird das maschinelle Lernsystem (12) angelernt.

Beim Anlernen des maschinellen Lernsystems (12) werden die Parameter der jeweiligen Schichten des maschinellen Lernsystems (12) derart angepasst, sodass das maschinelle Lernsystem, abhängig von den bereitgestellten Trainingseingangsgrößen, die jeweils zugeordneten Ausgangsgrößen ermittelt.

Vorzugsweise wird das Anlernen abhängig von einer Kostenfunktion durchgeführt, die beispielsweise eine Differenz zwischen den ermittelten Ausgangsgrößen (25) und der Trainingsausgangsgrößen charakterisiert. Die Kostenfunktion kann mittels eines Gradientenabstiegsverfahrens hinsichtlich der Parameter optimiert werden. Beim Gradientenabstiegsverfahren wird die Kostenfunktion iterativ optimiert, wobei üblicherweise ein Gradient mit einer Auflösung von 32 Bit verwendet wird. Die Parameter können abhängig von dem Gradienten angepasst werden, wodurch sich die Kostenfunktion verändert, so dass diese idealerweise minimiert oder maximiert wird. Da der Gradient üblicherweise eine Auflösung von 32 Bit aufweist, werden die angepassten Parameter abhängig von dem Gradienten mit vorzugsweise einer Auflösung von 32 Bit in dem Speicher (200) hinterlegt.

Nachdem das Anlernen in Schritt 32 durchgeführt wurde, folgt Schritt 33. In Schritt 33 werden die angepassten Parameter, die jeweils eine Auflösung von 32 Bit aufweisen, quantisiert. Zusätzlich kann zu der Quantisierung der Parameter die Auflösung der Aktivierungen verringert werden, vorzugsweise relativ zu der Quantisierung der jeweiligen Schichten.

Die Quantisierung der Parameter kann mittels einer linearen Quantisierung, aber auch mit einer nichtlinearen Quantisierung, beispielsweise einer logarithmischen Quantisierung, durchgeführt werden. Denkbar sind neben den genannten deterministischen Quantisierungen, auch stochastische Quantisierungen, siehe hierfür die eingangs genannten Dokumente.

Die Quantisierung kann beispielsweise derart durchgeführt werden, dass alle Schichten die gleiche Quantisierung aufweisen, vorzugsweise eine Quantisierung mit 8 Bit. Daraufhin können gezielt diejenigen Parameter der Schichten, die mit mehreren weiteren Schichten verbunden sind, stärker quantisiert werden, vorzugsweise mit 5 Bit. Alternativ kann für die Parameter derjenigen Schichten, die mit nur einer weiteren Schicht verbunden sind, jeweils unterschiedliche Quantisierungen verwendet werden, vorzugsweise Quantisierungen mit mehr als 8 Bit, insbesondere 8 bis 12 Bit. Denkbar ist auch, dass diejenigen Schichten, die mit mehreren weiteren Schichten verbunden sind jeweils unterschiedliche Quantisierung aufweisen, vorzugsweise Quantisierungen mit weniger als 8 Bit, insbesondere 4 bis 7 Bit.

Nachdem die Auflösung der Parameter reduziert wurde, werden die Parameter mit reduzierter Auflösung in Schritt 34 in dem Speicher (200) hinterlegt.

Damit endet das Verfahren (30). Es sei angemerkt, dass die Schritte 32 bis 34 zyklisch mehrfach hintereinander wiederholt werden können, bis ein vorgebbares Abbruchkriterium erfüllt ist. Optional kann bei Verwendung mehrere Stapel (engl. Batches) von Trainingsdaten nach Beenden des Schrittes 34, das maschinelle Lernsystem mit den neu hinterlegten Parametern bspw. für einen weiteren Stapel, beginnend mit Schritt 32, erneut angelernt werden.

In einem weiteren Ausführungsbeispiel kann nach Schritt 32 zusätzlich oder alternativ eine Reduktion der Auflösungen, d.h. eine Quantisierung, der Parameter und/oder der Aktivierungen der Schichten abhängig davon durchgeführt werden, ob eine Überbrückungsverbindung vorhanden ist oder nicht. Für den Fall, dass das maschinelle Lernsystem (12) zumindest eine Überbrückungsverbindung aufweist, werden die Auflösungen geringer gewählt, als für den Fall, dass es keine Überbrückungsverbindung aufweist. Zusätzlich oder alternativ kann aus einer Vielzahl unterschiedlicher Methoden zur Reduktion der Auflösung mit jeweils unterschiedlichen Eigenschaften hinsichtlich der Genauigkeit und/oder des Rechenaufwands abhängig von dem Vorhandensein der Überbrückungsverbindung eine geeignete Methode gewählt werden. Beispielsweise kann eine logarithmische Quantisierungsmethode, falls keine Überbrückungsverbindung vorhanden ist, und eine einfachere, z.B. lineare, Quantisierungsmethode, falls eine Überbrückungsverbindung vorhanden ist, ausgewählt werden. Vorteilhafterweise werden die Parameter und die Aktivierungen mit der gleichen Quantisierungsauflösung quantisiert, insbesondere die Schichten nach der Eingangsschicht, welche die Eingangsgröße erhält.

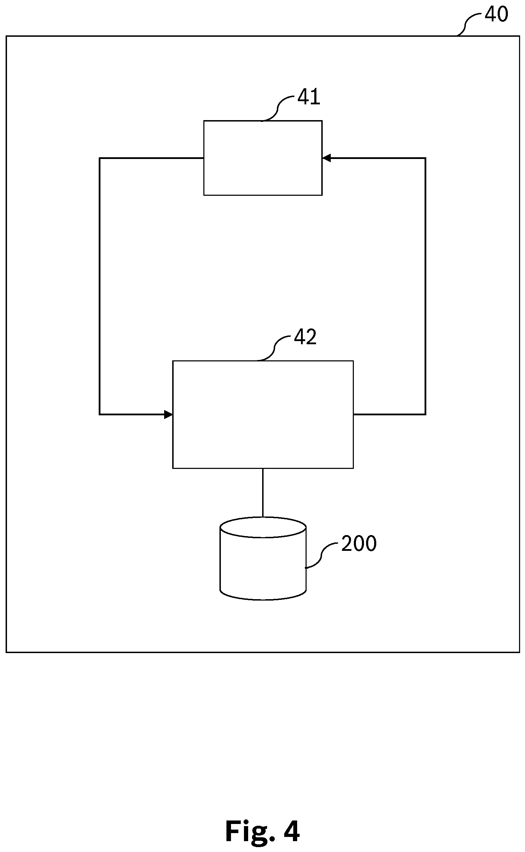

Figur 4 zeigt eine schematische Darstellung einer Vorrichtung (40) zum Erzeugen des maschinellen Lernsystems (12), insbesondere zum Ausführen der Schritte 31 bis 34 zum Erzeugen des maschinellen Lernsystems (12). Die Vorrichtung (40) umfasst ein Trainingsmodul (41) und ein zu trainierendes Modul (42). Dieses zu trainierende Modul (42) beinhaltet das maschinelle Lernsystem (12). Die Vorrichtung (40) zum Anlernen des maschinellen Lernsystems (12), lernt abhängig von Ausgangsgrößen des maschinellen Lernsystems (12) und bevorzugt mit vorgebbaren Trainingsdaten das maschinelle Lernsystem (12) an. Während des Anlernens werden Parameter des maschinellen Lernsystems (12), die in dem Speicher (200) hinterlegt sind, angepasst.

## Patentansprüche

1. Computerimplementiertes maschinelles Lernsystem (12), welches ein tiefes neuronales Netz (20) ist,
wobei das maschinelle Lernsystem (12) eine Mehrzahl von Schichten umfasst, die jeweils mit zumindest einer weiteren Schicht der Mehrzahl der Schichten eingangsseitig verbunden sind,
wobei die Schichten jeweils eingerichtet sind, eine Ausgangsgröße abhängig von Aktivierungen zu ermitteln, wobei die Schichten ferner jeweils eingerichtet sind, die Aktivierungen abhängig von mindestens einer Eingangsgröße der jeweiligen Schicht und abhängig von Parametern, die der jeweiligen Schicht zugeordnet sind, zu ermitteln,
wobei eine Auflösung der Parameter abhängig davon ist, ob eine der Schichten mit einer Mehrzahl von Schichten unmittelbar eingangsseitig verbunden ist oder nicht,
wobei eine Anzahl von Bit, mittels der die Parameter, insbesondere in einem Speicher, hinterlegt sind, die Auflösung charakterisiert,
wobei jeweils die Auflösung der Parameter derjenigen Schicht, die mit einer Mehrzahl von Schichten unmittelbar eingangsseitig verbunden ist, um zumindest mehr als ein Bit geringer ist, als die Auflösung der Parameter derjenigen Schichten, die mit genau einer Schicht unmittelbar eingangsseitig verbunden sind,
wobei das maschinelle Lernsystem (12) eine Eingangsschicht und eine Ausgangsschicht, die eine Ausgangsgröße ausgibt, umfasst,
wobei die Eingangsschicht eine Sensorgröße eines Sensors erhält, und die Ausgangsschicht entweder mit einer Steuereinheit verbunden ist und die Steuereinheit abhängig von der Ausgangsgröße eine Steuergröße zum Ansteuern eines physikalischen Aktors ermittelt oder die Ausgangsgröße die Sensorgröße klassifiziert.

2. Maschinelles Lernsystem (12) nach Anspruch 1 oder 2, wobei das maschinelle Lernsystem (12) zumindest eine Schicht aufweist, die mit genau einer Schicht unmittelbar eingangsseitig verbunden ist, wobei die Parameter oder Aktivierungen derjenigen Schichten, die mit genau einer Schicht unmittelbar eingangsseitig verbunden sind, jeweils eine Größe aus einer ersten Liste umfassend eine erste vorgebbare Anzahl quantisierter Größen, und die Parameter oder Aktivierungen derjenigen Schicht, die mit einer Mehrzahl von Schichten unmittelbar eingangsseitig verbunden ist, jeweils eine Größe aus einer zweiten Liste umfassend eine zweite vorgebbare Anzahl quantisierter Größen, aufweisen,
wobei ein Quantisierungsfehler der Größen der ersten Liste geringer ist als der Quantisierungsfehler der Größen der zweiten Liste.

3. Maschinelles Lernsystem (12) nach Anspruch 1 oder 2, wobei dann, wenn die Ausgangsschicht mit der Steuereinheit verbunden ist, abhängig von der ermittelten Steuergröße ein wenigstens teilautonomer Roboter und/oder ein Fertigungssystem und/oder ein persönlicher Assistent und/oder ein Zugangssystem und/oder ein Überwachungssystem oder ein medizinisch bildgebendes System angesteuert wird.

4. Computerimplementiertes Verfahren zum Erstellen eines komprimierten maschinellen Lernsystems (12), wobei das erstellte komprimierte maschinelle Lernsystem (12), welches ein tiefes neuronales Netz (20) ist, eine Mehrzahl von Schichten umfasst, die jeweils mit zumindest einer weiteren Schicht der Mehrzahl der Schichten eingangsseitig verbunden sind, wobei die Schichten jeweils eingerichtet sind, eine Ausgangsgröße abhängig von Aktivierungen zu ermitteln, wobei die Schichten ferner jeweils eingerichtet sind, die Aktivierungen abhängig von mindestens einer Eingangsgröße der jeweiligen Schicht und abhängig von Parametern, die der jeweiligen Schicht zugeordnet sind, zu ermitteln, wobei eine Auflösung der Parameter abhängig davon ist, ob eine der Schichten mit einer Mehrzahl von Schichten unmittelbar eingangsseitig verbunden ist oder nicht, wobei eine Anzahl von Bit, mittels der die Parameter, insbesondere in einem Speicher, hinterlegt sind, die Auflösung charakterisiert, wobei jeweils die Auflösung der Parameter derjenigen Schicht, die mit einer Mehrzahl von Schichten unmittelbar eingangsseitig verbunden ist, um zumindest mehr als ein Bit geringer ist, als die Auflösung der Parameter derjenigen Schichten, die mit genau einer Schicht unmittelbar eingangsseitig verbunden sind, wobei das maschinelle Lernsystem (12) eine Eingangsschicht und eine Ausgangsschicht, die eine Ausgangsgröße ausgibt, umfasst, wobei die Eingangsschicht eine Sensorgröße eines Sensors erhält, und die Ausgangsschicht entweder mit einer Steuereinheit verbunden ist und die Steuereinheit abhängig von der Ausgangsgröße eine Steuergröße zum Ansteuern eines physikalischen Aktors ermittelt oder die Ausgangsgröße die Sensorgröße klassifiziert,
wobei das komprimierte maschinelle Lernsystem (12) aus einem bereitgestellten maschinellen Lernsystem (12) mit folgendem Schritt erstellt wird:
Wählen einer Auflösung von Parametern des komprimierten maschinellen Lernsystems (12) durch Reduzieren der entsprechenden Auflösung von Parametern des bereitgestellten maschinellen Lernsystems (12), wobei die Auflösung der Parameter des komprimierten maschinellen Lernsystems (12) abhängig davon gewählt wird, ob eine der Schichten des bereitgestellten maschinellen Lernsystems (12) mit einer Mehrzahl von Schichten unmittelbar eingangsseitig verbunden ist oder nicht, wobei die entsprechende Auflösung der Parameter derjenigen Schicht des bereitgestellten maschinellen Lernsystems (12), die mit einer Mehrzahl von Schichten unmittelbar eingangsseitig verbunden ist, stärker reduziert wird, als die entsprechende Auflösung der Parameter derjenigen Schichten des bereitgestellten maschinellen Lernsystems (12), die mit genau einer Schicht unmittelbar eingangsseitig verbunden sind, wobei die Reduktion der Auflösung mittels einer Reduktion der Anzahl der Bits zur Darstellung der Größen ausgeführt wird.

5. Verfahren nach Anspruch 4, wobei die Reduktion der Anzahl der Bit abhängig von einer Quantisierung, insbesondere einer Anzahl von Quantisierungsstufen, durchgeführt wird.

6. Verfahren nach einem der vorherigen Ansprüche 4 oder 5, umfassend folgende weitere Schritte:
Bereitstellen von Trainingsdaten, die jeweils Eingangsgrößen und den Eingangsgrößen zugeordnete Ausgangsgrößen umfassen,
Anlernen des bereitgestellten maschinellen Lernsystems (12),
wobei beim Anlernen die Parameter derart angepasst werden, dass das maschinelle Lernsystem (12) jeweils abhängig von den Eingangsgrößen der Trainingsdaten jeweils deren zugeordnete Ausgangsgröße ermittelt.

7. Computerprogramm, welches Befehle umfasst, die beim Ausführen dieser mittels eines Computers, den Computer veranlassen das Verfahren (30) nach einem der Ansprüche 4 bis 6 auszuführen.

8. Maschinenlesbares Speichermedium (15), auf welchem das Computerprogramm nach Anspruch 7 hinterlegt ist.

9. Vorrichtung (40), die eingerichtet ist, das Verfahren nach Ansprüche 4 bis 6 auszuführen.

## Claims

1. Computer-implemented machine learning system (12), which is a deep neural network (20),
wherein the machine learning system (12) comprises a plurality of layers, each of which is connected to at least one further layer of the plurality of layers on the input side,
wherein the layers are each configured to determine an output variable depending on activations, wherein the layers are furthermore each configured to determine the activations depending on at least one input variable of the respective layer and depending on parameters assigned to the respective layer,
wherein a resolution of the parameters is dependent on whether or not one of the layers is connected to a plurality of layers directly on the input side,
wherein a number of bits by means of which the parameters are stored, in particular in a memory, characterizes the resolution,
wherein the resolution of the parameters of that layer which is connected to a plurality of layers directly on the input side is in each case at least more than one bit lower than the resolution of the parameters of those layers which are connected to exactly one layer directly on the input side,
wherein the machine learning system (12) comprises an input layer and an output layer, which outputs an output variable,
wherein the input layer receives a sensor variable of a sensor, and either the output layer is connected to a control unit and the control unit determines a control variable for controlling a physical actuator depending on the output variable or the output variable classifies the sensor variable.

2. Machine learning system (12) according to Claim 1 or 2, wherein the machine learning system (12) has at least one layer which is connected to exactly one layer directly on the input side, wherein the parameters or activations of those layers which are connected to exactly one layer directly on the input side each have a variable from a first list comprising a first predefinable number of quantized variables, and the parameters or activations of that layer which is connected to a plurality of layers directly on the input side each have a variable from a second list comprising a second predefinable number of quantized variables,
wherein a quantization error of the variables of the first list is smaller than the quantization error of the variables of the second list.

3. Machine learning system (12) according to Claim 1 or 2, wherein if the output layer is connected to the control unit, depending on the determined control variable, an at least partially autonomous robot and/or a manufacturing system and/or a personal assistant and/or an access system and/or a monitoring system or a medical imaging system are/is controlled.

4. Computer-implemented method for creating a compressed machine learning system (12), wherein the created compressed machine learning system (12), which is a deep neural network (20), comprises a plurality of layers, each of which is connected to at least one further layer of the plurality of layers on the input side, wherein the layers are each configured to determine an output variable depending on activations, wherein the layers are furthermore each configured to determine the activations depending on at least one input variable of the respective layer and depending on parameters assigned to the respective layer, wherein a resolution of the parameters is dependent on whether or not one of the layers is connected to a plurality of layers directly on the input side, wherein a number of bits by means of which the parameters are stored, in particular in a memory, characterizes the resolution, wherein the resolution of the parameters of that layer which is connected to a plurality of layers directly on the input side is in each case at least more than one bit lower than the resolution of the parameters of those layers which are connected to exactly one layer directly on the input side, wherein the machine learning system (12) comprises an input layer and an output layer, which outputs an output variable, wherein the input layer receives a sensor variable of a sensor, and either the output layer is connected to a control unit and the control unit determines a control variable for controlling a physical actuator depending on the output variable or the output variable classifies the sensor variable, wherein the compressed machine learning system (12) is created from a provided machine learning system (12) with the following step:
selecting a resolution of parameters of the compressed machine learning system (12) by reducing the corresponding resolution of parameters of the provided machine learning system (12), wherein the resolution of the parameters of the compressed machine learning system (12) is selected depending on whether or not one of the layers of the provided machine learning system (12) is connected to a plurality of layers directly on the input side, wherein the corresponding resolution of the parameters of that layer of the provided machine learning system (12) which is connected to a plurality of layers directly on the input side is reduced to a greater extent than the corresponding resolution of the parameters of those layers of the provided machine learning system (12) which are connected to exactly one layer directly on the input side, wherein the reduction of the resolution is carried out by means of a reduction of the number of bits for representing the variables.

5. Method according to Claim 4, wherein the reduction of the number of bits is carried out depending on a quantization, in particular a number of quantization levels.

6. Method according to either of the preceding Claims 4 and 5, comprising the following further steps:
providing training data that respectively comprise input variables and output variables assigned to the input variables, training the provided machine learning system (12), wherein during training the parameters are adapted in such a way that, respectively depending on the input variables of the training data, the machine learning system (12) respectively determines their assigned output variable.

7. Computer program comprising instructions which, when they are executed by means of a computer, cause the computer to carry out the method (30) according to any of Claims 4 to 6.

8. Machine-readable storage medium (15) on which the computer program according to Claim 7 is stored.

9. Device (40) configured to carry out the method according to Claims 4 to 6.

## Revendications

1. Système d'apprentissage automatique mis en oeuvre par ordinateur (12), qui est un réseau neuronal profond (20),
le système d'apprentissage automatique (12) comprenant une pluralité de couches, qui sont respectivement reliées en entrée à au moins une couche supplémentaire de la pluralité de couches,
les couches étant respectivement conçues pour déterminer une grandeur de sortie en fonction d'activations, les couches étant en outre respectivement conçues pour déterminer les activations en fonction d'au moins une grandeur d'entrée de la couche respective et en fonction de paramètres qui sont associés à la couche respective,
une résolution des paramètres étant dépendante du fait que l'une des couches est reliée ou non directement en entrée à une pluralité de couches,
un nombre de bits, au moyen duquel les paramètres sont enregistrés, notamment dans une mémoire, caractérisant la résolution,
la résolution des paramètres de la couche qui est reliée directement en entrée à une pluralité de couches étant respectivement inférieure d'au moins plus d'un bit à la résolution des paramètres des couches qui sont reliées directement en entrée à exactement une couche,
le système d'apprentissage automatique (12) comprenant une couche d'entrée et une couche de sortie qui délivre en sortie une grandeur de sortie,
la couche d'entrée recevant une grandeur de capteur d'un capteur, et la couche de sortie étant soit reliée à une unité de commande et l'unité de commande déterminant, en fonction de la grandeur de sortie, une grandeur de commande destinée à commander un actionneur physique, soit la grandeur de sortie classifiant la grandeur de capteur.

2. Système d'apprentissage automatique (12) selon la revendication 1 ou 2, le système d'apprentissage automatique (12) possédant au moins une couche qui est reliée directement en entrée à exactement une couche, les paramètres ou les activations des couches qui sont reliées directement en entrée à exactement une couche présentant respectivement une grandeur issue d'une première liste comprenant un premier nombre pouvant être prédéfini de grandeurs quantifiées, et les paramètres ou les activations de la couche qui est reliée directement en entrée à une pluralité de couches présentant respectivement une grandeur issue d'une deuxième liste comprenant un deuxième nombre pouvant être prédéfini de grandeurs quantifiées,
une erreur de quantification des grandeurs de la première liste étant inférieure à l'erreur de quantification des grandeurs de la deuxième liste.

3. Système d'apprentissage automatique (12) selon la revendication 1 ou 2, un robot au moins partiellement autonome et/ou un système de fabrication et/ou un assistant personnel et/ou un système d'accès et/ou un système de surveillance ou un système d'imagerie médicale étant commandés en fonction de la grandeur de commande déterminée lorsque la couche de sortie est reliée à l'unité de commande.

4. Procédé mis en oeuvre par ordinateur pour créer un système d'apprentissage automatique (12) compressé, le système d'apprentissage automatique (12) compressé créé, qui est un réseau neuronal profond (20), comprenant une pluralité de couches qui sont respectivement reliées en entrée à au moins une couche supplémentaire de la pluralité de couches, les couches étant respectivement conçues pour déterminer une grandeur de sortie en fonction d'activations, les couches étant en outre respectivement conçues pour déterminer les activations en fonction d'au moins une grandeur d'entrée de la couche respective et en fonction de paramètres qui sont associés à la couche respective, une résolution des paramètres étant dépendante du fait que l'une des couches est reliée ou non directement en entrée à une pluralité de couches, un nombre de bits, au moyen duquel les paramètres sont enregistrés, notamment dans une mémoire, caractérisant la résolution, la résolution des paramètres de la couche qui est reliée directement en entrée à une pluralité de couches étant respectivement inférieure d'au moins plus d'un bit à la résolution des paramètres des couches qui sont reliées directement en entrée à exactement une couche, le système d'apprentissage automatique (12) comprenant une couche d'entrée et une couche de sortie qui délivre en sortie une grandeur de sortie, la couche d'entrée recevant une grandeur de capteur d'un capteur, et la couche de sortie étant soit reliée à une unité de commande et l'unité de commande déterminant, en fonction de la grandeur de sortie, une grandeur de commande destinée à commander un actionneur physique, soit la grandeur de sortie classifiant la grandeur de capteur,
le système d'apprentissage automatique (12) compressé étant créé à partir d'un système d'apprentissage automatique (12) fourni avec l'étape suivante : sélection d'une résolution de paramètres du système d'apprentissage automatique (12) comprimé en réduisant la résolution correspondante de paramètres du système d'apprentissage automatique (12) fourni, la résolution des paramètres du système d'apprentissage automatique (12) comprimé étant sélectionnée en fonction du fait que l'une des couches du système d'apprentissage automatique (12) fourni est reliée ou non directement en entrée à une pluralité de couches, la résolution correspondante des paramètres de la couche du système d'apprentissage automatique (12) fourni qui est reliée directement en entrée à une pluralité de couches étant réduite plus fortement que la résolution correspondante des paramètres des couches du système d'apprentissage automatique (12) fourni qui sont reliées directement en entrée à exactement une couche, la réduction de la résolution étant effectuée au moyen d'une réduction du nombre de bits servant à la représentation des grandeurs.

5. Procédé selon la revendication 4, la réduction du nombre de bits étant effectuée en fonction d'une quantification, notamment d'un nombre de niveaux de quantification.

6. Procédé selon l'une des revendications 4 ou 5 précédentes, comprenant les étapes supplémentaires suivantes :
fourniture de données d'entraînement qui comprennent respectivement des grandeurs d'entrée et des grandeurs de sortie associées aux grandeurs d'entrée, instruction du système d'apprentissage automatique (12) fourni, les paramètres étant adaptés lors de l'instruction de telle sorte que le système d'apprentissage automatique (12) détermine respectivement, à chaque fois en fonction des grandeurs d'entrée des données d'entraînement, leur grandeur de sortie associée.

7. Programme informatique, lequel comporte des instructions qui, lorsqu'elles sont exécutées sur un ordinateur, amènent l'ordinateur à mettre en oeuvre le procédé (30) selon l'une des revendications 4 à 6.

8. Support de stockage lisible par machine (15), sur lequel est enregistré le programme informatique selon la revendication 7.

9. Dispositif (40), lequel est conçu pour mettre en aeuvre le procédé selon l'une des revendications 4 à 6.
